# EUROPEAN PATENT APPLICATION

(11) **EP 3 415 963 A1**
(43) Date of publication of application: **19.12.2018**
(21) Application number: 17175913.7
(22) Date of filing: 14.06.2017
(51) Int. Cl.: G02B 5/124, G02B 5/128, B41M 5/50

(54) **RETROREFLECTIVE SHEETING**

(71) Applicant: 3M Innovative Properties Company, Saint Paul, MN 55133-3427 (US)
(72) Inventor: BOEHME, Volker, 47495 Rheinberg (DE); MEYER, Thomas, 42119 Wuppertal (DE); NGUYEN, Trung Kien, 40591 Düsseldorf (DE); DANNEWITZ, Viktor, 40764 Langenfeld (DE); FRIEDRICH, Jens, 41352 Korschenbroich (DE); ZIMMERMANN, Detlef, 40724 Hilden (DE)
(74) Representative: Vossius & Partner Patentanwälte Rechtsanwälte mbB

(57) **Abstract**

The present disclosure relates to retroreflective sheetings. The retroreflective sheetings include a printable polymeric film and a retroreflective substrate that may have a protected metal layer. The metal layer may be protected by a thin protective coating having a glass transition temperature of at least 25 °C. Alone or in combination with the protective coating, the sheetings may also include a thin primer layer with a glass transition temperature of at least 25 °C bonding the printable top film to the retroreflective substrate. Such sheetings may be used in a variety of applications including signs and license plates.

## Description

### FIELD

The present disclosure relates to retroreflective sheetings. The retroreflective sheetings include a retroreflective substrate having a protected metal layer. The sheetings also includes a polymeric film that may be printable using, e.g., thermal transfer printing. In some embodiments, the sheetings include a thin, high Tg primer layer positioned between the polymeric film and the retroreflective substrate. Applications, such a protected license plate sheeting, are also described.

### SUMMARY

Briefly, in one aspect, the present disclosure provides a retroreflective sheeting comprising a retroreflective substrate comprising a first surface and an opposite second surface, wherein the second surface comprises a metal layer; a polymer film having a first surface and an opposite second surface, wherein the second surface of the polymer film is bonded to the first surface of the retroreflective substrate; and a protective coating bonded to the metal layer, wherein the protective coating has a glass transition temperature (Tg) of at least 25 °C as measured according to the Glass Transition Temperature Procedure and form an outer surface of the retroreflective sheeting. In some embodiments, the glass transition temperature of the protective coating is at least 35 °C as measured according to the Glass Transition Temperature Procedure. In some embodiments, the protective coating is 10 to 100 microns thick, inclusive.

In some embodiments, the polymer film is directly bonded to the first surface of the retroreflective substrate. In some embodiments, the polymer film is indirectly bonded to the first surface of the retroreflective substrate by a primer layer, wherein the primer layer has a glass transition temperature of at least 25 °C as measured according to the Glass Transition Temperature Procedure, and a thickness of no greater than 20 microns. In some embodiments, the primer layer is 3 to 15 microns thick, inclusive.

In some embodiments, the retroreflective substrate comprises a plurality of microspheres at least partially embedded in a binder. In some embodiments, the retroreflective substrate comprises a polymeric layer having a microstructured surface. In some embodiments, the metal layer is bonded to the microstructured surface.

In some embodiments, the retroreflective further comprises an image printed onto the first surface of the polymer film. In some embodiments, the image comprises alphanumeric characters.

In another aspect, the present disclosure provides a retroreflective article comprising a transparent plate bonded to the first surface of the polymer film of the retroreflective sheeting according to any of the embodiments described herein. In some embodiments, the article further comprises an optically clear adhesive bonding the transparent plate to the first surface of the polymer film. In some embodiments, the article is a license plate or a sign.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

**FIG. 1** illustrates a printable retroreflective sheeting of the prior art.
**FIG. 2** illustrates an exemplary printable retroreflective sheeting according to some embodiments of the present disclosure.
**FIG. 3** illustrates another exemplary printable retroreflective sheeting according to some embodiments of the present disclosure.
**FIG. 4** illustrates another exemplary printable retroreflective sheeting according to some embodiments of the present disclosure.
**FIG. 5** illustrates an exemplary application for printable retroreflective sheeting according to some embodiments of the present disclosure.

### DETAILED DESCRIPTION

Retroreflective sheetings and there uses in a variety of applications including signs (e.g., graphics and traffic signs) and license plates are well known. Exemplary retroreflective layers include microsphere-based sheeting and microstructured-based sheeting (e.g., cube corner sheeting). Microsphere-based sheeting, sometimes called "beaded" sheeting, employs a multitude of microspheres having associated specular or diffuse reflecting materials to retroreflect incident light. The microspheres are usually at least partially embedded in a binder layer. Microstructured-based sheeting comprises a body portion typically having a substantially planar front surface and a structured rear surface comprising a plurality of microstructured elements. For example, cube corner retroreflective sheeting comprises a plurality of cube corner elements with each cube corner element comprising three approximately mutually perpendicular optical faces. Some microstructured-based sheeting also includes associated specular or diffuse reflecting materials to further retroreflect incident light.

Thin metal layers, e.g., vapor coated metal, are a commonly used as the associated specular or diffuse reflecting material to retroreflect incident light. While such metal layers are more commonly used with microsphere-based sheeting, they are also used in some microstructure-based sheeting.

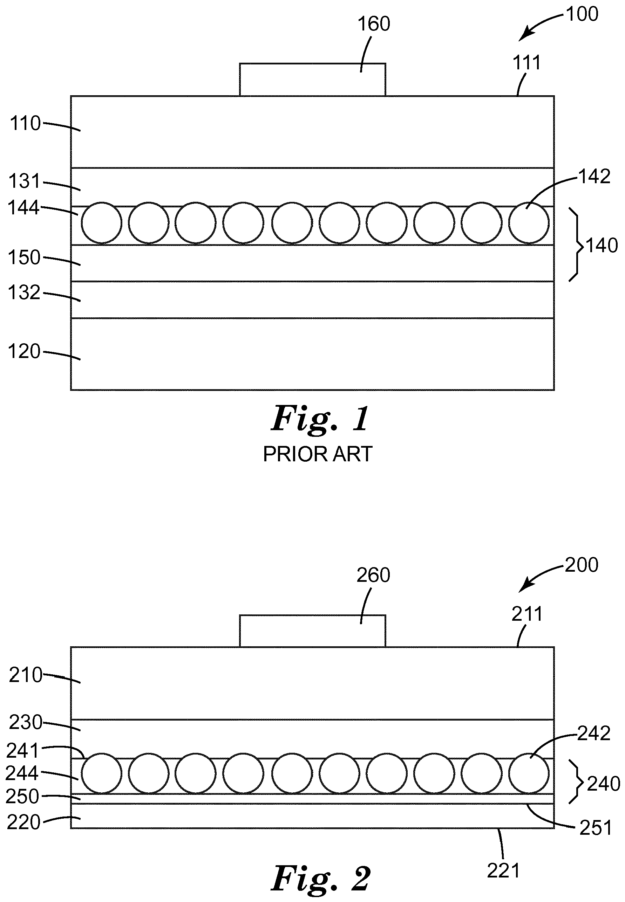

A cross section of retroreflective sheeting **100** of the prior art is illustrated in **FIG. 1****.** Retroreflective sheeting **100** includes retroreflective substrate **140.** Although any retroreflective substrate may be used, as illustrated in **FIG. 1****,** retroreflective substrate **140** is a microsphere-based material comprising a plurality of microspheres **142** partially embedded in binder **144** and metal layer **150** bonded to binder **144.** First adhesive layer **131** bonds first polymeric film **110** to the surface of retroreflective substrate **140** opposite metal layer **150.** Second adhesive layer **132** bonds second polymeric film **120** to metal layer **150.**

In some applications, the retroreflective sheeting needs to be flexible. For example, flexible sheeting may be required when the material is to be applied to curved substrates. Even when intended to be applied to flat surfaces, flexibility may be desirable during processing steps such as roll to roll processing, printing and lamination.

Prior art constructions illustrated in **FIG. 1** result in an I-beam structure with the first and second polymer films **(110** and **120)** separated by two adhesive layers **(131** and **132)** and the retroreflective substrate **(140).** Even when using conformable polymeric films, this construction can significantly reduce conformability as an I-beam structure generally has a high bending stiffness. Specifically, the inclusion of the relatively thick adhesive layers bonding the polymeric layers to the retroreflective layer substantially increases stiffness, as bending stiffness increases by the cube of the distance between the two polymeric films.

In many applications, retroreflective sheeting is printed. In particular, it is often desirable to print information onto sheeting including variable information such as license plate numbers and barcodes, and fixed text such as traffic directions (e.g., STOP or speed limits). Particularly when printing variable information, techniques such as ink jet printing, laser printing, and thermal transfer printing may be preferred.

Generally, the first polymeric film has been selected such that its first surface **111** is print receptive to print **160,** i.e., print **160** transfers to and binds well with first surface **111.** The features that make a surface print receptive may depend on the intended methods and materials used for printing. For example, some methods may require a smoother surface while others may benefit from some degree of roughness. In addition, the specific polymer from which the first polymeric film is formed may be selected for its compatibility (e.g., adhesion and wet-out) with the intended ink or toner.

In some embodiments, high quality print may be desired. Efforts have been made to improve print quality including efforts to reduce or eliminate one or more of (a) the wicking or feathering of inks, (b) drop-outs or voids, and (c) slur or distortion, particularly in the print direction. These efforts have focused on the improvements to top surface **111** of first polymer film **110.** For example, surface treatments such as corona treatment may be used or print receptive surface coatings may be applied. Such methods may improve ink adhesion and/or contribute to a desired surface roughness or smoothness.

International Publication Number WO 2009/120398 ("An Improved Retroreflective Film Containing a Polymeric Face Film and Method of Manufacturing Therefore") describes problems of print distortion that arise when thermal transfer printing retroreflective sheeting. The proposed solution is to provide a retroreflective film comprising a retroreflective sub-structure and a transparent polymeric film having a surface roughness profile where the Arithmetic Mean Deviation of the Roughness Profile (Ra) ranges from about 0.18 microns to about 1.30 microns and where the Mean Spacing of Local Peaks (R-S) in the print direction ranges from about 10 microns to about 85 microns, located over and coupled to the retroreflective sub-structure.

However, the present inventors have discovered that such restrictions on the surface print receptivity or roughness may not be sufficient to insure high print quality, particularly when using print processes requiring the application of heat and pressure such as thermal transfer printing and some forms of ink jet and laser printing. For example, the present inventors discovered that the adhesive layer bonding the first polymeric layer to the retroreflective substrate can soften and distort under the printing conditions. This can lead to deformations and slur in the print, particularly in the print direction, that cannot be overcome by modification of surface roughness or chemical treatments.

The retroreflective sheetings of the present disclosure overcome one or more of these deficiencies. In some embodiments, retroreflective sheetings of the present disclosure provide improved print quality, increased conformability, reduced cost and complexity (e.g., fewer layers), or a combination of these features.

A cross-section of a retroreflective sheeting according to the some embodiments of the present disclosure is shown in **FIG. 2****.** Retroreflective sheeting **200** comprises polymer film **210** bonded to first surface **241** of retroreflective substrate **240** by adhesive **230.**

Generally, a wide variety of polymeric materials may be used to form the polymeric film. Suitable polymers include polyesters, polyvinyl chlorides, poly(methyl methacrylates), and ethylene vinyl acetates. In some embodiments, multilayer films may be useful, including coextruded films. Typical thicknesses range from 50 to 150 microns, although other thicknesses may also be suitable. In some embodiments, the polymer film, in particular its top surface **211,** is selected to achieve the desired print receptivity to print **260.** This can include using any of various known surface treatments and coatings.

Generally, any known retroreflective substrate may be used, provided the substrate includes a metal layer, e.g., vapor coated metal, as the associated specular or diffuse reflecting material to retroreflect incident light. Thus, the specific details of the retroreflective substrate may be varied in any embodiments of the present disclosure. For example, for any embodiments describing the use of a microsphere-based retroreflective substrate, a microstructure-based substrate could be used instead. Similarly, for any embodiments describing the use of a microstructure-based substrate, a microsphere-based retroreflective substrate could be used instead.

In addition, various optional components associated with microsphere-based retroreflective substrate or microstructure-based substrate can be used for each of the embodiments even if they are not expressly described with respect to that embodiment. For example, other layers known in the art such as top coat layers, bead bond layers, and encapsulating layers may be present. Likewise, various features associated with retroreflective substrates such as surface treatments and structures (e.g., embossings) may be used, even if they are not expressly described.

For illustration purposes, retroreflective substrate **240** of **FIG. 2** is a microsphere-based material comprising a plurality of microspheres **242** at least partially embedded in binder **244.** Metal layer **250** is bonded to binder **244** on the side opposite polymeric film **210.**

Although thick metal layers could be used, e.g., 50 nanometers (nm) thick layers, in some embodiments, the metal layer is as thin as possible, while still providing the desired level of retroreflectivity. The use of a metal vapor coat minimizes the impact of the metal layer on the bending stiffness, while also reducing unnecessary costs associated with thicker metal layers. In some embodiments, the metal layer is no thicker than 5 nanometers (nm), e.g., no greater than 2 nm, or even no greater than 1 nm. In some embodiments, the metal layer is 0.1 to 5 nm, e.g., 0.1 to 2 nm, or even 0.1 to 1 nm thick, inclusive.

Generally, any metal having the desired reflective properties may be used. In some embodiments, suitable metals include silver and aluminum. In some embodiments, the metal layer is a metal vapor coat, e.g., an aluminum vapor coat.

Some retroreflective films are applied to further substrates using an adhesive (e.g., a pressure sensitive adhesive) applied to the metal layer. However, other application methods may be used such as mechanical fasteners. In such applications, the metal layer would be exposed to the environment which could lead to degradation of the metal layer.

As illustrated in **FIG. 2****,** retroreflective sheeting **200** further comprises protective coating **220** applied to surface **251** of metal layer **250.** Protective coating **220** may be applied to surface **251** of metal layer **250** using any known application method including e.g., spraying, roll coating, gravure coating, and the like.

Generally, no further layers are required on surface **221** of protective coating **220.** That is, protective coating **220** provides an outer (i.e., exposed) surface of retroreflective sheeting **200.** Because protective coating **220** provides an outer, exposed surface it should be non-tacky. In particular, protective coating **220** is not an adhesive intended to be bonded to yet another substrate, e.g., a pressure sensitive adhesive.

Generally, the glass transition temperature (Tg) of the protective coating is greater than room temperature, e.g., at least 25 °C. In some applications, the sheeting may be exposed to higher temperatures, e.g., in outdoor applications such as license plates. In some embodiments, the Tg of the protective coating is at least 30 °C or even at least 35 °C. In contrast, typical pressure sensitive adhesives have a Tg below 0 °C, e.g., below -20 °C.

Generally, the composition of the protective coating can be selected based on the desired glass transition temperature and from known corrosion-protective properties such a moisture permeability. In some embodiments, suitable materials comprise polyurethanes, polyesters, polyvinyl chlorides, acrylics, and combinations thereof.

Generally, the protective coating need only be thick enough to inhibit or prevent corrosion of the metal layer. Thus, unlike the relatively thick adhesive-bonded, polymeric films of the prior art, relatively thin protective coatings may be used. For example, in some embodiments, the protective coating is no greater than 100 microns thick, e.g., no greater than 80, or even no greater than 50 microns thick. In some embodiments, the protective coating is at least 5 microns, e.g., at least 10 microns, e.g., at least 20 microns thick. In some embodiments, the protective coating is 10 to 100 microns, 20 to 80 microns, or even 20 to 60 microns thick, inclusive.

In such embodiments, the final construction does not include the additional polymeric film adhesively bonded to the metal layer by an adhesive layer. This has several significant benefits including a reduction in bending stiffness, due in part to eliminating the I-Beam structure formed between the two, separated polymeric films of the prior art; and a reduction in the cost and complexity of the final product.

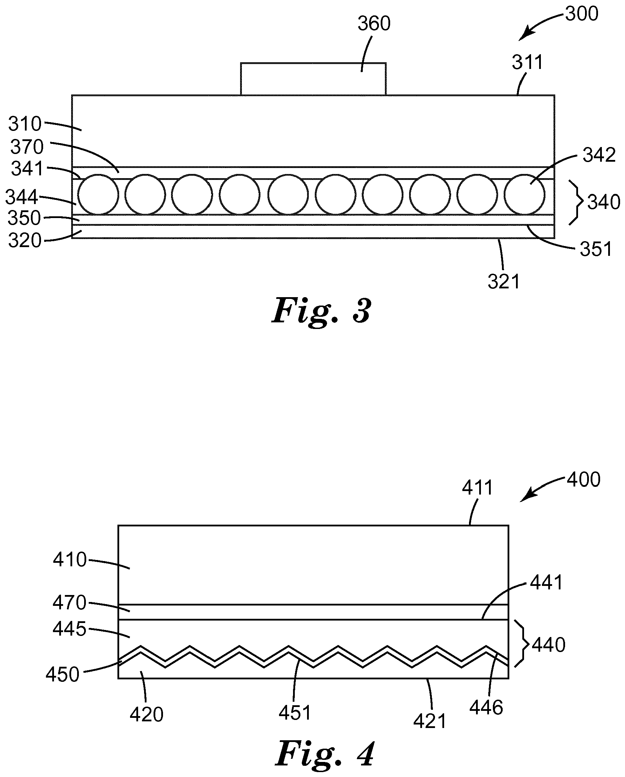

Another retroreflective sheeting according to the some embodiments of the present disclosure is shown in **FIG. 3****.** Retroreflective sheeting **300** comprises polymer film **310** bonded to first surface **341** of retroreflective substrate **340.** In some embodiments, the polymer film, in particular its top surface **311,** is selected to achieve the desired print receptivity relative to print **360.** This can include any of various known polymers alone or in combination with surface treatments and coatings.

Although any retroreflective substrate comprising a metal layer may be used, for illustration purposes retroreflective substrate **340** is a microsphere-based material comprising a plurality of microspheres **342** at least partially embedded in binder **344.** Metal layer **350** is bonded to binder **344** on the side opposite polymeric film **310.** Protective coating **320** protects metal layer **350.** Generally, no further layers are required on surface **321** of protective coating **320.** That is, protective coating **320** may provide an outer (i.e., exposed) surface of retroreflective sheeting **300.**

In some embodiments, the polymer film may be directly bonded to the top surface of the retroreflective substrate. In some embodiments, the polymer film may be indirectly bonded to the first surface of the retroreflective substrate through one or more intermediate layers. For example, referring to **FIG. 3****,** polymer film **310** is indirectly bonded to first surface **341** by primer layer **370.**

Generally, the primer layer is selected such that both (a) the bond between polymer film **310** and primer layer **370,** and (b) the bond between retroreflective substrate **340** and primer layer **370,** are stronger than the bond between polymer film **310** and retroreflective substrate **340** in the absence of primer layer **370.** The particular selection of materials for the primer layer will depend on the compositions of the polymer film (including any associated surface treatments) and the composition of the surface of the retroreflective substrate to which it is to be bonded.

A wide variety of primer materials are available, and methods of their selection for a particular application are known to one of ordinary skill in the art. In some embodiments, suitable materials comprise polyurethanes, polyolefins, polyesters, polyvinyl chlorides, acrylics, and combinations thereof.

The present inventors have discovered that the use of relatively thick (e.g., 50 to 75 microns) pressure sensitive adhesives to bond a print-receptive polymer film to a retroreflective substrate can lead to poor print quality. In particular, many common methods of applying print require the use of heat and pressure to bond the ink to the substrate or to cure or fuse the ink or toner. Such methods include thermal transfer printing and some forms of ink jet and laser printing. Under the applied conditions of heat and pressure - particularly the shear forces under the thermal transfer print head or a fuser roller - a pressure sensitive adhesive layer can distort. This can lead to deformations in the print, e.g., lines intended to be sharp or straight can become slurred or bowed.

By using relatively thin primer layers having a higher glass transition temperature (Tg), the present inventors discovered that print defects (e.g., slur) could be reduced or eliminated. In some embodiments, the primers have a glass transition temperature of at least 25 °C. In some embodiments, the Tg of the primer is at least 30 °C, or even at least 35 °C. The use of such higher Tg primers reduces or eliminates softening and flow of the primer when exposed to temperatures found in some printing applications such as thermal transfer printing.

Independent from the Tg, in some embodiments, the primer layer is no greater than 20 microns thick, e.g., no greater than 15 or even no greater than 10 microns thick. In contrast, pressure sensitive adhesive layers are often 25 to 50 microns thick, or even thicker. Generally, the primer layer is at least 3 microns, e.g., at least 5 microns thick. In some embodiments, the primer layer is 3 to 20 microns, e.g., 3 to 15, or even 3 to 10 microns thick, inclusive. By reducing the thickness of this layer, even if there is some softening of the primer, the amount of distortion during the printing process is reduced, particularly where the distortion is a result of shear forces.

Another retroreflective sheeting according to the some embodiments of the present disclosure is shown in **FIG. 4****.** Retroreflective sheeting **400** is similar to retroreflective sheeting **300,** except that a microstructure-based retroreflective substrate is used. Thus, retroreflective sheeting **400** comprises retroreflective substrate **440** with polymer film **410** bonded to first surface **441.** In some embodiments, the polymer film may be directly bonded to the first surface of the retroreflective substrate. However, in the exemplary embodiment of **FIG. 4****,** polymer film **410** is indirectly bonded to top surface **441** by primer layer **470.**

Retroreflective substrate **440** is a microstructure-based material comprising a polymeric layer **445** having microstructured surface **446.** Metal layer **450** is bonded to microstructured surface **446** (e.g., the metal layer may be vacuum deposited). Protective coating **420** is applied to surface **451** of metal layer **450.** Generally, no further layers are required on surface **421** of protective coating **420.** That is, protective coating **420** may provide an outer (i.e., exposed) surface of retroreflective sheeting **400.**

Although the exemplary embodiments of **FIGS. 3** and **4** illustrate retroreflective sheetings where a thin, high Tg primer layer is used in constructions that also have a thin, high Tg protective layer, this is not required. In some embodiments, certain benefits - including improved print quality - can be achieved by using a thin, high Tg primer even in combination with an adhesively bonded polymer film protecting the metal layer. Even in such a construction, the use of a thin, higher Tg primer will minimize or eliminate slur associated with the softening and distortion of thicker, lower Tg adhesives. This is expected to be particularly advantageous in thermal printing applications.

For example, in some embodiments, a retroreflective sheeting may comprise a retroreflective substrate comprising a first surface and an opposite second surface. Any retroreflective substrate may be used including those that do not require a metal layer as well as those that include an adhesively-bonded polymeric film on the second surface of the retroreflective substrate. A polymer film having a first surface and an opposite second surface is indirectly bonded to the first surface of the retroreflective substrate by a primer layer of the present disclosure.

For example, in some embodiments, the primers have a glass transition temperature of at least 25 °C. In some embodiments, the Tg of the primer is at least 30 °C, or even at least 35 °C. Independent from Tg, in some embodiments, the primer layer is no greater than 20 microns thick, e.g., no greater than 15 or even no greater than 10 microns thick. In contrast, pressure sensitive adhesive layers are often 25 to 50 microns thick, or even thicker. Generally, the primer layer is at least 3 microns, e.g., at least 5 microns thick. In some embodiments, the primer layer is 3 to 20 microns, e.g., 3 to 15, or even 3 to 10 microns thick, inclusive.

A 75 micron thick polyester film (HOSTAPHAN GN 75 CT01, from Mitsubishi) that has a surface coating for print receptivity was obtained.

A crosslinked polyurethane primer was produced on the side of the film opposite the print-receptive coating as follows. The primer coating contained 56.00 wt.% urethane (NEOREZ 960) and 1.73 wt.% of a polyfunctional aziridine crosslinker (NEOCRYL CX-100, 1.73 wt.%), both from DSM Coating Resins, LLC. The coating also included 30.42 wt.% ethanol, 11.63 wt.% water, 0.14 wt.% bubble breaker (WITCO/BALAB 3056A), 0.06 wt.% surfactant (SURFYNOL 104 PA), and 0.01 wt.% fluorescent dye (BLANCOPHOR SOL). The film was coated with a primer coating via a counter-rotating gravure cylinder and cured resulting in a final dried thickness of about 10 microns.

A bead coat slurry was applied to this primer layer and cured resulting in a thickness of 105 microns. The slurry contained:
a. 15.92 wt.% MOWITAL B 60 H (polyvinyl butyral; Kuraray),
b. 2.88 wt.% URALAC AN586 (alkyd resin plasticizer; DSM Coating Resins),
c. 1.14 wt.% RESIMENE 717 (methylated melamine-formaldehyde; INEOS Melamines),
d. 0.05 wt.% TINUVIN 770 (hindered amine light stabilizer; BASF),
e. 46.33 wt.% n-Butanol,
f. 30.70 wt.% xylol,
g. 2.98 wt.% deionized water, and
h. 47.5 grams bead per 100 grams solution (6220-3925 glass beads; 3M Company).

An aluminum layer was then applied to the bead coat layer by vapor coating using a 1.6 millimeter aluminum wire (from Manifisa) resulting in a thickness of 1 nanometer. This structure had an exposed layer of metal (i.e., the aluminum vapor coat).

The protective layer was prepared by combining:
a. 84.3 wt.% URALAC CP1049 SU ND (urethane extended polyester; DSM Coating Resins)
b. 10.1 wt.% RESIMENE 881 (partially-butylated melamine-formaldehyde; Monsanto),
c. 2.7 wt.% titanium dioxide,
d. 2 wt.% BYK-ES 80 (solution of an alkylol ammonium salt of an unsaturated carboxylic acid ester; BYK Additives & Instruments), and
e. 0.9 wt.% butylglycol.
This protective layer was applied to achieve a dried thickness of 50 microns over the exposed metal layer.

The resulting retroreflective sheeting was subjected to tests set out in the "Specification for Retroreflecting number plates", British Standard Automobile Series BS AU 145d : 1998. The tests are results are shown in Table 1.

**Table 1: Test Results**

| **Test** | **BS AU 145d : 1998** | **Result** |
|---|---|---|
| Colorimetric test | Clause 9 - page 4 | Pass |
| Retroreflection test | Clause 10 - page 4 | Pass |
| Resistance to solvents | Clause 12 - page 4 | Pass |
| Thermal resistance | Clause 13 - page 7 | Pass |
| Resistance to corrosion | Clause 15 - page 7 | Pass |
| Resistance to weathering | Clause 16 - page 7 | Pass |

Samples of the retroreflective sheeting were thermal transfer printed using a Merlin Scion SD Number Plate Printer. A variety of both wax and wax/resin based thermal transfer ribbons were used. Good print quality was observed with uniform black images with sharp edges. There were no drop-outs or other voids. Also, there was no slur in the print direction despite the use of heat and pressure in the printing process.

A Comparative Example was prepared with the same construction except that the thin, high Tg primer layer was replaced with a transparent, acrylic pressure sensitive adhesive having a Tg of less than 0 °C. The adhesive was applied at a coat weight of 30 grams per square meter, resulting in a thickness of about 30 microns.

This comparative sample was thermal transfer printed using a Merlin Scion SD Number Plate Printer. The print showed unacceptable slur in the print direction.

Glass Transition Temperature Procedure. The glass transition temperature (Tg) was measured according to the following procedure. Dynamic mechanical analysis and sample preparation were performed according to ASTM E1640-09 ("Standard Test Method for Assignment of the Glass Transition Temperature by Dynamic Mechanical Analysis"). Specimens of rectangular shape measuring between 10 x 3 x 0.03 mm and 10 x 4 x 0.03 mm were used. Dynamic mechanical measurements were performed using a DMA 242E Artemis (Netzsch-Geratebau GmbH, Germany) in tension mode at a fixed frequency of 1 Hz and fixed strain of 0.5 % in a temperature range from -50 to +100 °C with a heating rate of 2 °C/min. The temperature of the tangent delta (loss factor) peak maximum was taken to represent the temperature range over which the glass transition takes place, which is commonly referred to as the glass transition temperature.

The Tg of the protective layer was measured according to the Glass Transition Temperature Procedure. The Tg of the protective layer was 39 °C.

Generally, the retroreflective sheetings of the present disclosure may be used in any application where retroreflective sheeting is used, including decoration, signs (e.g., traffic and safety signs), and license plates. In some embodiments, an adhesive layer could be used to adhere the retroreflective sheeting to another substrate. For example, in some embodiments, an adhesive, e.g., a pressure sensitive adhesive, may be bonded to the protective coating and the resulting structure bonded to a further substrate such as metal plates for traffic signs or polymers.

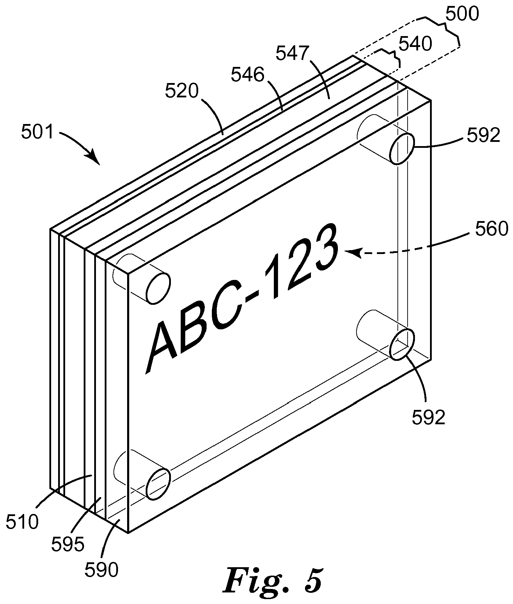

However, the retroreflective sheetings of the present disclosure may provide advantages in applications where the protective coating remains uncovered, i.e., where this layer is not covered by an adhesive or otherwise bonded directly to a substrate that covers the protective coating. One such application is illustrated in **FIG. 5****.** As any retroreflective sheeting according to any of the embodiments of the present disclosure may be used, certain details of the retroreflective substrate are not shown.

Referring to **FIG. 5****,** retroreflective article **501** includes retroreflective sheeting **500** bonded to plate **590.** Retroreflective sheeting **500** includes retroreflective substrate **540** shown generally as a combination of layer **547** and metal layer **546.** Additional details of exemplary retroreflective substrates, including both microsphere-based and microstructure-based substrates, are described herein with reference to **FIGS. 2** to **4****.** Protective layer **520** covers metal layer **546** and provides an exposed surface.

Polymer film **510,** which is shown directly bonded to retroreflective substrate **540,** may also be indirectly bonded through a primer layer. Optically clear adhesive **595** bonds plate **590** to the surface of polymer film **510.** Plate **590** is also transparent such that print **560** is legible and/or machine readable through optically clear adhesive **595** and plate **590.** Print **560** is not particularly limited and is illustrated here as a series of alphanumeric characters (ABC-123).

In some embodiments, it may be desirable to print onto the protective layer, e.g., to print fixed images or logos. These may be printed by known means, including e.g., gravure and inkjet printing.

The resulting retroreflective article may be used in any of a variety of known applications. For example, in some embodiments, the retroreflective article may be a license plate. In some embodiments, the retroreflective article may be a decoration or a sign. In some embodiments, further means may be used to mount retroreflective article **501** to a further article. For example screws or other mechanical fasteners may be inserted through optional mounting holes **592** in plate **590** and fastened to an underlying substrate. For example, mechanical fasteners may be used to mount a license plate to a vehicle.

Various modifications and alterations of this invention will become apparent to those skilled in the art without departing from the scope and spirit of this invention.

## Claims

1. A retroreflective sheeting comprising a retroreflective substrate comprising a first surface and an opposite second surface, wherein the second surface comprises a metal layer; a polymer film having a first surface and an opposite second surface, wherein the second surface of the polymer film is bonded to the first surface of the retroreflective substrate; and a protective coating bonded to the metal layer wherein the protective coating has a glass transition temperature (Tg) of at least 25 °C as measured according to the Glass Transition Temperature Procedure and forms an outer surface of the retroreflective sheeting.

2. The retroreflective sheeting according to claim 1, wherein the polymer film is directly bonded to the first surface of the retroreflective substrate.

3. The retroreflective sheeting according to claim 1, wherein the polymer film is indirectly bonded to the first surface of the retroreflective substrate by a primer layer, wherein the primer layer has a glass transition temperature of at least 25 °C as measured according to the Glass Transition Temperature Procedure, and a thickness of no greater than 20 microns.

4. The retroreflective sheeting according to any one of the preceding claims, wherein the glass transition temperature of the protective coating is at least 35 °C as measured according to the Glass Transition Temperature Procedure.

5. The retroreflective sheeting according to any one of the preceding claims, wherein the protective coating is 10 to 100 microns thick, inclusive.

6. The retroreflective sheeting according to any one of the preceding claims, wherein the primer has a glass transition temperature of at least 35 °C as measured according to the Glass Transition Temperature Procedure.

7. The retroreflective sheeting according to any one of the preceding claims, wherein the primer layer is 3 to 15 microns thick, inclusive.

8. A retroreflective sheeting comprising a retroreflective substrate comprising a first surface and an opposite second surface, and a polymer film having a first surface and an opposite second surface, wherein the second surface of the polymer film is indirectly bonded to the first surface of the retroreflective substrate by a primer layer having a glass transition temperature of at least 25 °C as measured according to the Glass Transition Temperature Procedure, and a thickness of no greater than 20 microns.

9. The retroreflective sheeting of claim 8, wherein the primer has a glass transition temperature of at least 35 °C as measured according to the Glass Transition Temperature Procedure.

10. The retroreflective sheeting of claim 8 or 9, wherein the primer layer is 3 to 15 microns thick, inclusive.

11. The retroreflective sheeting according to any one of the preceding claims, wherein the retroreflective substrate comprises a plurality of microspheres at least partially embedded in a binder.

12. The retroreflective sheeting according to any one of claims 1 to 10, wherein the retroreflective substrate comprises a polymeric layer having a microstructured surface.

13. The retroreflective sheeting according to anyone of the preceding claims further comprising an image printed onto the first surface of the polymer film.

14. The retroreflective sheeting of claim 13, wherein the image comprises alphanumeric characters.

15. The retroreflective sheeting of claim 13 or 14, wherein the image is a thermal transfer printed image.

16. A retroreflective article comprising a transparent plate bonded to the first surface of the polymer film of the retroreflective sheeting according to any one or the preceding claims.

17. The retroreflective article of claim 16, further comprising an optically clear adhesive bonding the transparent plate to the first surface of the polymer film.

18. The retroreflective article according to claim 16 or 17, wherein the article is a license plate.

19. The retroreflective article according to claim 16 or 17, wherein the article is a sign.
